# EUROPEAN PATENT SPECIFICATION

(11) **EP 4 200 565 B1**
(45) Date of publication and mention of the grant of the patent: **19.06.2024**
(21) Application number: 21777844.8
(22) Date of filing: 24.08.2021
(51) Int. Cl.: F24D 10/00, F24D 19/10

(54) **CONTROL METHOD FOR A DISTRICT HEATING GRID**
STEUERUNGSVERFAHREN FÜR EIN FERNWÄRMENETZ
PROCÉDÉ DE COMMANDE POUR UN RÉSEAU DE CHAUFFAGE URBAIN

(30) Priority: 24.08.2020 IT 202000020344
(43) Date of publication of application: 28.06.2023
(73) Proprietor: Politecnico Di Torino, 10129 Torino (IT)
(72) Inventor: CAPONE, Martina, 10129 Torino (IT); GUELPA, Elisa, 10129 Torino (IT); VERDA, Vittorio, 10129 Torino (IT)
(74) Representative: Mola, Edoardo
(86) International application number: PCT/IB2021/057742
(87) International publication number: WO 2022/043866

(56) References cited:
- EP-A1- 3 587 949
- WO-A1-2020/083453
- DE-T2- 69 510 944
- KR-A- 20110 035 006
- KR-B1- 101 580 170

## Description

### Field of invention

The present invention relates to a method for controlling district heating networks or grids and more specifically concerns a method for mitigating the peak heat demand of a thermal power plant associated with the district heating network following the night shutdown or attenuation of the heating systems of buildings connected to the network.

### State of the art

The object of the present invention is to reduce the thermal demand peaks in the power plants, which follow relatively long periods of shutdown or attenuation of the heating systems of the connected buildings and to make the network more ready to react to the peaks themselves.

The basic idea of this technical solution is to present a method for the management of a district heating network such to act on the by-pass valves present in the heat exchange stations of the users or thermal centers, to circulate the water in the primary pipes and therefore heat up in preparation for the thermal demand of all the users, often a plurality of users, downstream of the exchanger, e.g. connected to the secondary circuit of the exchanger. Therefore, in a time interval of lower thermal demand that precedes a time interval of higher thermal demand, the water circulating in the closed circuit is pre-heated in order to accumulate thermal energy useful for the next time interval in which the thermal request of the plant increases.

In particular, the proposed method involves adjusting the amount of energy necessary for heating the network or a part of it at a time prior to the start-up time. The quantity of delivered energy and the delivery processes by the plant are carried out in different ways e.g. both through an empirical approach and on the basis of historical data, and again through thermo-fluid dynamics simulations of the district heating network, considering the variation over time of the thermal loads of the connected users.

This objective is achieved via opening, in a controlled and remote manner, of the by-pass valves present in the network, in particular in the primary water circuit connected directly to heat power plant.

DE 69510944 T2 discloses a method and system for transferring heating and/or cooling power from the distribution networks to the heating or cooling networks of a building by means of a heat exchanger or heat exchangers which can be fluidically connected through by-pass valves.

WO 2020/083453 A1 discloses a heating network having a heat exchanger on the user side, a bypass situated between the inlet line and the return line from the heat exchanger and a flow valve situated in the bypass, wherein the flow valve is a flow control valve.

### Brief description of the drawings

Further objects and advantages of the present invention will become clear from the detailed description that follows, about an exemplary embodiment of the same (and of its variants) and from the attached drawings purely for explanatory and non-limiting purposes, in which:
- figure 1a shows, according to a hydraulic diagram, a district heating network;
- figure 1b shows a further hydraulic diagram of a district heating network;
- Figure 2 shows in a comparison chart the results related to the simulation of the network with and without the implementation of this method; and
- Figures 3 to 5 illustrate further graphs of respective results according to different types of control.

The same reference numbers and letters in the figures identify the same elements or components.

The elements and features illustrated in the various preferred embodiments, including the drawings, can be combined with each other without however departing from the scope of the present application as described below.

### Detailed description

The subject of this patent application is a method for controlling a district heating network, aimed at attenuating thermal power peaks of the plant / s to meet the thermal demand.

The proposed method is implemented through remotely controlling of by-pass valves arranged along by-pass ducts located in various points of the network (including substations) to define one or more closed circuits for the circulation of water to and from the thermal power plant even when the demand for thermal power of the final users is low or zero. The consecutive steps from switching off to switching on the utility systems can be summarized as follows.

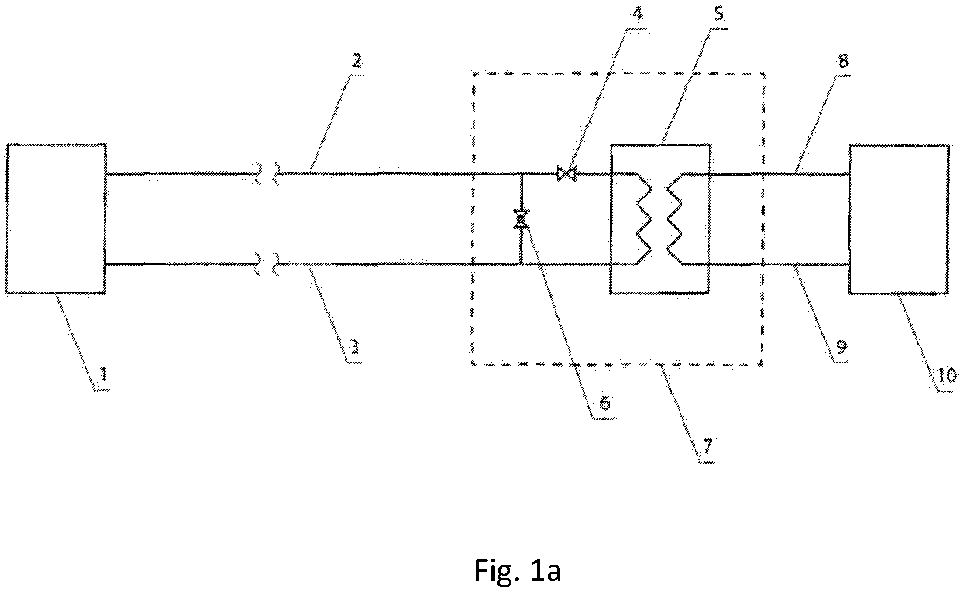

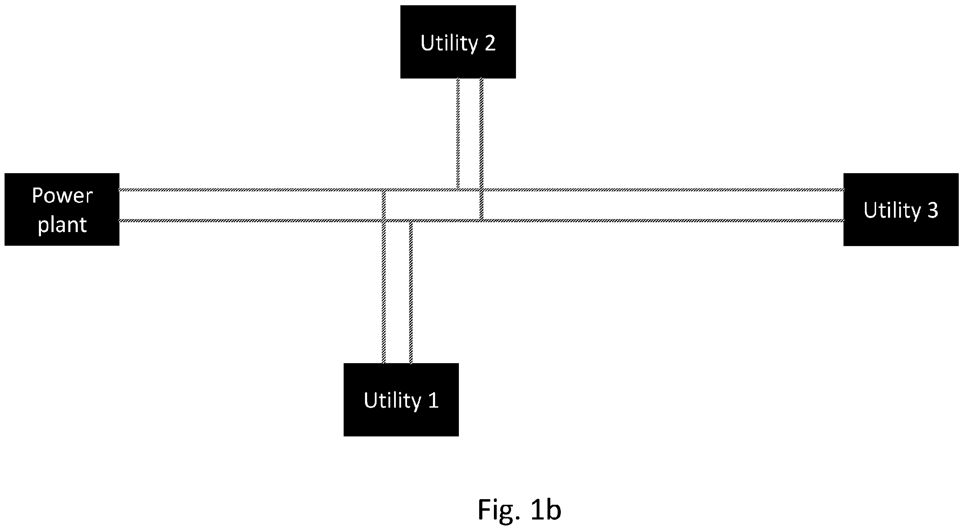

Purely by way of simplified example, reference is made to a fictitious network comprising a delivery pipe, a single user, a return pipe and a power plant. This network includes a primary circuit fed by hot water leaving a heat generation station 1 through a pipe 2 and returns colder water to the station 1 through a pipe 3. Pipe 2 defines the inlet to a heat exchanger 5 through a valve 4. The primary circuit is therefore a closed circuit between power plant 1 and exchanger 5. In general, the primary circuit comprises large diameter flow and return pipes normally arranged side by side when installed. According to the present invention, upstream of valve 4, delivery pipe 2 and return pipe 3 are connected by a by-pass pipe with a relative valve 6 that, when closed, connects pipes 2, 3 via a primary branch releasing heat through heat exchanger 5 and, when opened if valve 4 is closed, defines a closed loop between heating plant 1 and pipes 2, 3. The by-pass duct, depending on the overall configuration of the network, can be placed wherever it is possible to provide, when valve 4 is closed for sending the flow of hot water to one or more users and valve 6 is open, a closed circuit for recirculating the water through the power plant and, therefore, to provide a pre-heating of the water in recirculation while the demand for thermal power is still low or zero. In this way it is possible to provide hot water, i.e. pre-heated, to heat exchanger 5 more quickly when end user 10 requires thermal power. In the example, bypass duct 6 is located in a technical room of the building together with heat exchanger 5, but it can also be located in correspondence with a thermal center of gravity or at another point in the network, to define a closed circuit between a segment of the primary flow pipe and a segment of the primary return pipe. Exchanger 5 comprises a secondary branch, i.e. which receives heat, connected to inlet pipes 8, i.e. at lower temperature and outlet pipes 9, i.e. at a higher temperature after receiving heat, to heat a user 10, e.g. a residential, office, company building etc.
A) In stationary operating conditions, when the user requires a certain thermal power, valve 4 is open. The control unit introduces a flow of hot water at T_{delivery} into the delivery pipe of primary circuit 2. This flow passes through heat exchanger 5, in which it transfers heat to the secondary circuit of user 8-9, and then flows through the return pipe of primary circuit 3 with a lower temperature, reaching the plant with a temperature equal to Tᵣₑₜᵤᵣₙ. Consequently, the plant has to provide a thermal flow such as to increase the fluid temperature by ΔT = T_{delivery} - Tᵣₑₜᵤᵣₙ.
B) At shutdown, when the user no longer requires heat power, valve 4 is closed. The flow rate in primary circuit 2-3 is zero (or very low in case of attenuation). The mass of water present in the pipes stops and begins to cool. In the case of prolonged shutdowns, the decrease in temperature in the network or grid can be very significant, and the ΔT increases considerably. In the case of Figure 1b, a control of the flow rate of the primary circuit is such as to initially slow or stop the flow of water coming from the plant when the request for thermal power is low or zero.
C) At the time of switching on, the flow rate circulating in the network grows rapidly to increase the temperature of the utilities. According to the present invention, it is intended to avoid that, when switched on, the power plant has to provide, in addition to the large flow rate, also a very high temperature difference due to the reduction of the water temperature in the network due to the night transient, which causes a reduction in the temperature of the return flow. For this reason, it is necessary to evacuate (or partially evacuate) the mass of cold water present in the return pipe mᵣₑₜᵤᵣₙ = ρ * Vᵣₑₜᵤᵣₙ before activating the utilities.
   In order for the mass of cold water to be treated e.g. heated, it is possible to establish the flow rate intended to circulate before the actual start-up of the system (G_{bypass}); in this way, in a network with only one user, the evacuation time will be automatically determined as t_{evacuation} = mᵣₑₜᵤᵣₙ / G_{bypass}. Conversely, it is possible to assume the treatment time and calculate the bypass flow accordingly.
D) At this point, the time at which the user will begin to request thermal power again (tₛₜₐᵣₜ₋ᵤₚ) is known, for example through historical data or through a numerical simulation of the system i.e. of the variability over time of the plurality of users, it is possible to identify the time instant where to activate the new regulation system (t_{by-pass} = tₛₜₐᵣₜ₋ᵤₚ - t_{evacuation}). Therefore, at t_{by-pass}, by-pass valve 6 is opened, while regulation valve 4 remains closed or partially open, effectively execution the operation of the primary circuit completely or partially decoupled from the secondary circuit. The by-pass flow rate does not cross the heat exchanger but flows directly from primary circuit delivery pipe 2 to return pipe 3.

Finally, when the user requests heat power again, valve 4 is opened and by-pass valve 6 closed. The water flows through heat exchanger 5, supplying the required thermal power to the secondary circuit.

It should be noted that for the purpose of the operation of the invention, valve 4 must be remotely adjusted (or the corresponding control parameters must be able to be adjusted) and at least valve 4 is controlled on the basis of the temperature measured in the secondary branch of exchanger 5 and / or any other parameter or data that can be acquired to establish the thermal request of plant 1. The flow rate of the primary circuit is variable, and therefore the circulation pumps also have a variable flow rate, adaptively based on the requests of the various users.

By means of this regulation method, at the moment of actual start-up after step C of pre-treatment performed during a time interval with low thermal demand to the plant, the return temperature to the plant is higher, depending on the actuations performed, compared to that when not applying the method of the invention and becomes equal to the delivery one neglecting dispersions occurred both during shutdown and during operation. In fact, it should be noted that the primary circuit and, in general, the network significantly impact the heating dynamics of the water arriving at exchanger 5 e.g. due to heat losses along the pipes.

According to the present method, therefore, a preheating of the distribution network is provided by bypassing the user. The duration of the preheating and the relative flow rate must be sufficient to evacuate a significant portion of the mass of cold water present in the return pipes depending on the specific system and its operation. In this way, at the moment of actual switching on, the temperature of the water returning to the plant is higher as on average it corresponds to that of the delivery network, except for dispersions along the pipes of the network and in particular of the primary closed circuit. Consequently, the thermal power of the plant decreases.

When the mass of water to be evacuated is known, it is possible to carry out preheating both taking into account the variability over time of the plurality of users and the propagation dynamics of the thermal effects between the plant and exchanger 5:
a) with large flow rates and short times;
b) with small flow rates and prolonged times.

For a correct evacuation of the mass of cold water, the limitations of the maximum flow rate in each pipe must be respected, in relation to the pressure limitations.

A further advantage of the method is the thermal comfort of the users. Thanks to the preheating of the network, the target temperature of the building is reached much earlier; in fact, at the time of switching on, the hot water is already present near the building, and the travel time of the hot water flow is significantly reduced.

For illustrative and demonstrative purposes, an example is given. In a small network, the application of the proposed invention was simulated through the implementation of a detailed thermo-fluid dynamic model of the network, integrated with a user model. Preferably, the detailed network model allows in particular to estimate the propagation dynamics in the network of the thermal effects generated by the power plant 1.

The model is able to calculate the power profile required by the plant starting from the data relating to the target temperature of the users and the external conditions. The results of the simulation, performed with the hypothesis of evacuation of the mass of cold water relating to the return network in a time of 1.5 h, were compared with the results relating to the simulation of the network without the implementation of the proposed method.

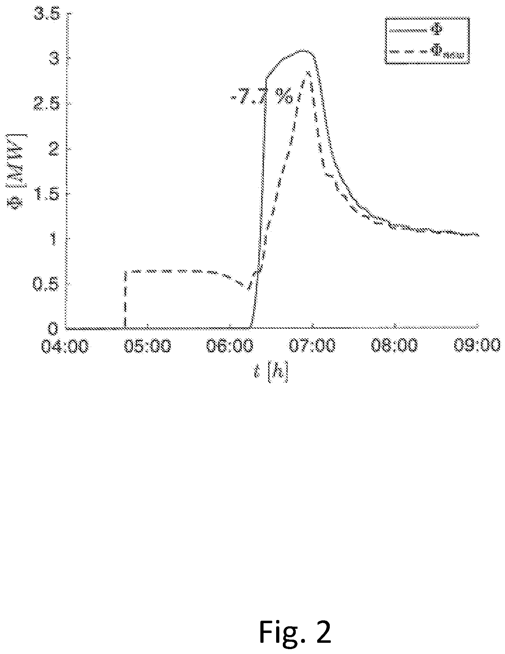

Figure 2 shows the load profiles in the two conditions.

The method proposed in the present patent application allows a reduction of the maximum power point of 7.7%. This result was obtained by activating the circulation of water upstream of the primary branch of heat exchanger 5 to allow the water in return pipe 3 to flow through thermal power plant 1 in the 1.5 hour immediately preceding the estimated time of increase in the request.

The advantages of the present method are even more significant the greater the volume of the pipe sections which become "cold" during the night.

The method object of the present invention operates locally but, preferably and in order to obtain optimization, requires information relating to the network in which it is installed. This information can be provided, in addition to considerations on the functioning of the network derived from field measurement campaigns or numerical simulations, through appropriate settings of the control system or through commands sent from a centralized system. In general, the control methods intend to obtain the minimization of the peak power supplied by at least one thermal power plant, defined as the product of the flow rate in the primary circuit, the specific heat of the water, and the difference in temperature between the water supply and return in the thermal power plant.

Implementation variants of the described non-limiting example are possible, without however departing from the scope of protection of the present invention, including all the equivalent embodiments for a person skilled in the art, to the content of the claims.

For example, an arbitrary selection of preheating times and user by-pass flow rates is possible. The latter are selected as fractions of the maximum flow rate allowed by each substation. The advantage lies in the ease of implementation, which does not require knowledge of the characteristics of the network and its operating parameters. On the other hand, knowledge of the switch-on times of the users is required, which determines the thermal request of the plant and is therefore an acquired parameter on the basis of which to start the pre-heating.

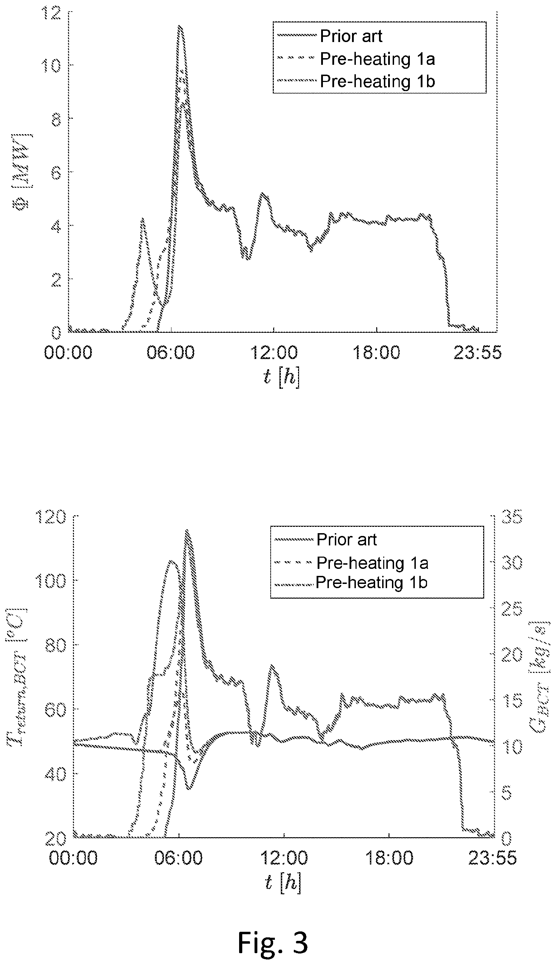

Two exemplary cases were tested. In the first test (1a - figure 3), a preheating time of 1 hour and a by-pass flow rate equal to ¼ of the maximum flow rate were set for each building. This made it possible to reduce the maximum power to 9.8 MW (-14.6% compared to the base case), with an increase in thermal energy limited to + 0.21%. It is important to remember that the increase in thermal energy does not correspond to an increase in primary energy, as the surplus is concentrated in instants of time in which there is greater availability of high-efficiency energy sources, while the load is reduced in the peak hours in which it would be necessary to use less efficient resources. Overall, therefore, a reduction in primary energy is obtained, which can be quantified once the production system has been identified.

In the case of the second test (1b - figure 3), carried out with a greater preheating than in the previous case (2 hours with ½ of the maximum by-pass flow rate), the maximum power was reduced to 8.6 MW (-25% compared to in the base case) with an increase in thermal energy of + 0.32%.

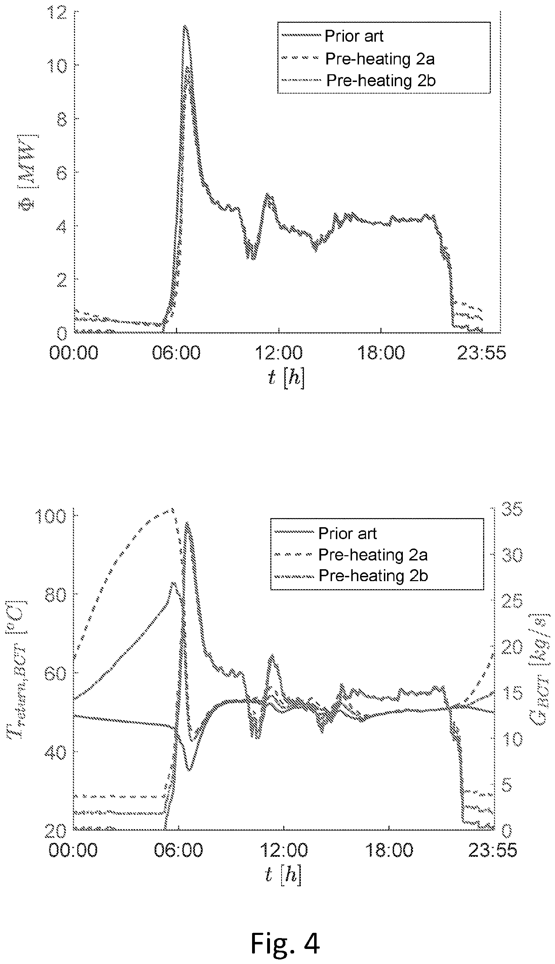

The method provides for maintaining a minimum flow rate in circulation at all instants of time. This method is simple to apply and manage as it is not required to know the switch-on time of the thermal utilities. In fact, the by-pass valve is opened whenever the regulating valve is closed. Two tests were carried out by imposing a by-pass flow rate for each user equal to 1/10 (test 2a - figure 4) and 1/20 (test 2b - figure 4) respectively of the corresponding maximum flow rate. For test 2a, a reduction in maximum power of -17.4% (approximately 9.5 MW) and an increase in energy of 2.26% was obtained. For test 2b, -13.3% for maximum power (equal to 9.9 MW) and + 1.30% for thermal energy.

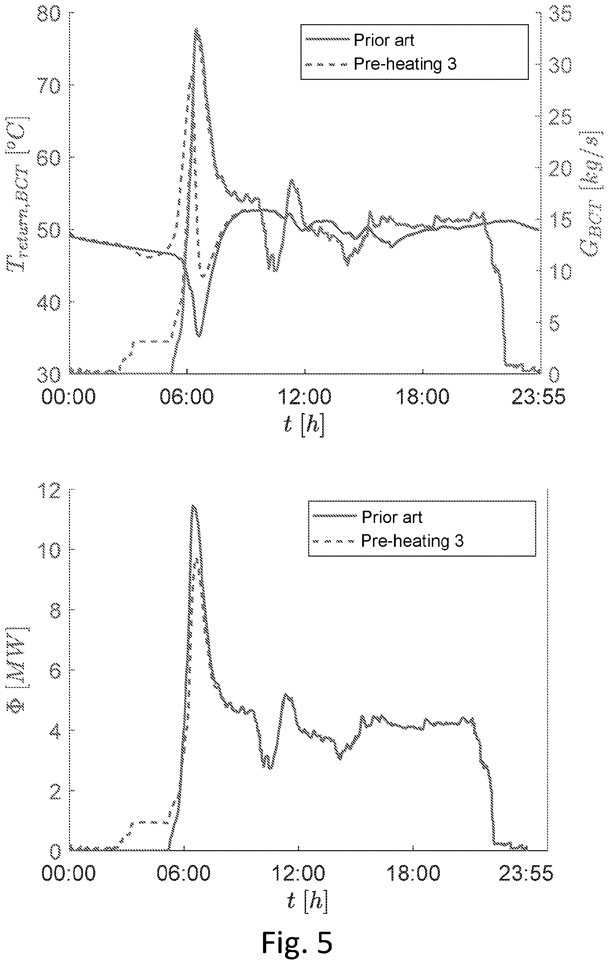

A further variant involves setting a preheating time and calculating the by-pass flow rates that must be used to dispose of the amount of cold water in the indicated time frame. The calculation of the flow rates is performed through an algorithm that solves a system of non-linear equations. In the event that all users had the same switch-on time, the calculation would be simpler and the identified flow rates would lead to the complete disposal of the quantity of cold water from the return network. In reality, the switch-on in the utilities occurs in a non-contemporary way; the analytical calculation is approximate and the flow rates obtained can lead to excessive or reduced disposal. The algorithm requires knowledge of the topology and characteristics of the district heating network (lengths and diameters of the ducts, incidence matrix, etc.). In the simulation performed (figure 5) a preheating time of 3 hours was used. With this method it is possible to obtain a reduction in the maximum power of -15.1% (the peak in this case is equal to 9.72 MW) and an increase in thermal energy of + 0.17%.

According to a further alternative embodiment, with respect to the optimization described in the previous paragraph, a correction is introduced on the preheating times, which are no longer set the same in all the users, but are adapted according to the switching times of each of them, with respect to at an average ignition time. The correction is made after the calculation of the by-pass flow rates, for which the same approximation described in the previous paragraph is used. The preheating time used in the test is preferably 3 hours, which are then corrected with respect to the average ignition time. In this way a peak of 9.65 MW is obtained (-15.4% compared to the base case), with an increase in thermal energy of only + 0.01%.

It is also possible to select flow rates and preheating times through optimization. The optimization is of the Mixed Integer Nonlinear type and can be conducted, for example, through the use of a genetic algorithm. It is possible to choose between different target functions, such as peak power or daily thermal energy. If the production system (and possibly storage) is known, the optimizer can be integrated with a production system optimizer, and it is possible to set different types of target functions, such as primary energy, the cost of production or total CO2 emissions. Another option is that of multi-target optimization.

From the above description the person skilled in the art is able to realize the object of the present invention without introducing further construction details.

## Claims

1. Control method of a district heating grid comprising:
- a thermal power plant (1) to supply thermal power to at least one user station (10),
- a delivery piping (2) for hot water flowing from the power plant (1),
- a return piping (3) for colder water entering the power plant (1),
- a heat exchanger (5) in correspondence with the at least one user station having a primary branch connected to the delivery and return piping (2, 3) and to define a first closed loop with the power plant (1),
- a valve (4), **characterized in that** the valve (4) is placed on the first closed loop and configured to selectively close/open the inlet fluidic connection to the heat exchanger (5) and
- a by-pass duct between the delivery and return piping (2, 3) with a by-pass valve (6),
the control method comprising the steps of:
- Estimating or acquiring a demand increase time (t_{*start*-*up*}) of power plant demand increase by the user station;
- Supplying before the demand increase time (t*ₛₜₐᵣₜ₋ᵤₚ*) the delivery piping (2) based on the power demand of the power plant with hot water when the by-pass valve (6) and the valve (4) are switched so as to define a second closed loop through which the water flows, the second closed loop substantially excluding the exchanger (5) and including the return piping (3) so that the flow rate at the temperature (T_{delivery}) flows through the by-pass duct towards the return piping (3), with a consequent preheating of said second closed circuit and increase in the water temperature received by the at least one power station;
- Switching, based on the power demand of the power plant, the valve (4) and the by-pass valve (6) so that the hot water of the delivery piping (2) flows through the first closed circuit including the heat exchanger (5) and the return piping (3), and the temperature (T_{delivery}) downstream of the by-pass duct is higher than that of when the step of supplying began.

2. Control method according to claim 1, wherein the step of starting comprises the step of pre-heating a pre-defined fraction of the maximum by-pass flow rate for a pre-defined time before the estimated time of demand increase.

3. Control method according to claim 1, wherein the step of starting is activated at a pre-defined time before the estimated time of demand increase and the by-pass flow rate is calculated on the basis of an estimation of the at least one user station at peak time.

4. Control method according to claim 1, wherein the bypass valve (6) is open at a fraction of the maximum flow rate each time the valve (4) is closed or defines a first flow through the exchanger and a second flow rate through the by-pass duct.

5. Control method according to claim 1, wherein the starting time of said step of starting and/or the opening of the by-pass valve (6) are calculated via the optimization of a predetermined target or multi target peak power or thermal energy function based
For the peak power target function at least on the difference between the inlet and outlet water temperatures of the at least one power plant to minimize a power peak of the power plant
For the thermal energy at least on the difference between the inlet and outlet water temperatures of the at least one power plant to optimize primary energy, the cost of production or total CO2 emissions,
the multi target function being a combination of the peak power target function and the thermal energy target funtion.

6. Control method according to any one of the preceding claims, comprising the preliminary step of connecting the delivery piping (2) to the return piping (3) via the bypass duct equipped with the bypass valve (6).

7. Control method according to any one of the preceding claims, wherein the starting time of said delivery step is calculated on the basis of a thermo-fluid-dynamic mathematical model of the district heating network.

## Patentansprüche

1. Verfahren zur Steuerung eines Fernwärmenetzes umfassend:
- ein Wärmekraftwerk (1) zur Versorgung mindestens einer Verbraucherstation (10) mit Wärmeenergie;
- eine Zuleitung (2) für aus dem Wärmekraftwerk (1) fließendes Warmwasser,
- eine Rücklaufleitung (3) für kälteres Wasser, das in das Wärmekraftwerk (1) gelangt,
- einen Wärmetauscher (5) entsprechend der mindestens einen Verbraucherstation, der über einen primären Bypass verfügt, der mit der Zu- und Rücklaufleitung (2, 3) verbunden ist und einen ersten geschlossenen Kreislauf mit dem Wärmekraftwerk (1) definiert
- ein Ventil (4), **dadurch gekennzeichnet, dass** das Ventil (4) im ersten geschlossenen Kreislauf angeordnet ist und so konfiguriert ist, dass es die Einlassflüssigkeitsverbindung zum Wärmetauscher (5) selektiv schließt/öffnet
- eine Bypass-Leitung zwischen den Zu- und Rücklaufleitungen (2, 3) mit einem Bypass-Ventil (6), wobei das Steuerungsverfahren folgende Schritte umfasst:
- Schätzen oder Erfassen einer Nachfrageanstiegszeit (t*ₛₜₐᵣₜ₋ᵤₚ*) eines Anstiegs des Leistungsbedarfs des Wärmekraftwerks durch die Verbraucherstation;
- Versorgen die Versorgungsleitung (2) vor der Nachfrageanstiegszeit (t*ₛₜₐᵣₜ₋ᵤₚ*) entsprechend dem Leistungsbedarf des Wärmekraftwerks mit Warmwasser, wenn das Bypass-Ventil (6) und das Ventil (4) derart geschaltet werden, um einen zweiten geschlossenen Kreislauf zu definieren, durch den das Wasser zirkuliert, wobei der zweite geschlossene Kreislauf den Wärmetauscher (5) im Wesentlichen ausschließt und die Rücklaufleitung (3) umfasst, so dass der Durchfluss mit der Temperatur (T_{delivery}) durch die Bypass-Leitung zur Rücklaufleitung (2) fließt, was zu einer entsprechenden Vorwärmung des zweiten geschlossenen Kreislaufs und einer Erhöhung der Temperatur des von dem mindestens einen Wärmekraftwerk empfangenen Wassers führt;
- Schalten nach dem Leistungsbedarf des Wärmekraftwerks, das Ventil (4) und das Bypass-Ventil (6), so dass das Warmwasser aus der Zuleitung (2) durch den ersten geschlossenen Kreislauf, bestehend aus dem Wärmetauscher (5) und der Rücklaufleitung (3), zirkuliert, und wobei die Temperatur (T_{delivery}) nach der Bypass-Leitung höher als zu Beginn des Zulaufschritts, ist.

2. Steuerungsverfahren nach Anspruch 1, wobei der Startschritt den Schritt des Vorheizens eines vordefinierten Bruchteils des maximalen Bypass-Stroms für eine vordefinierte Dauer vor der geschätzten Dauer des Bedarfsanstiegs, umfasst.

3. Steuerungsverfahren nach Anspruch 1, wobei der Startschritt zu einem vordefinierten Zeitpunkt vor dem geschätzten Zeitpunkt des Bedarfsanstiegs aktiviert wird und der Bypass-Strom auf der Grundlage einer Schätzung mindestens einer Verbraucher in einem Spitzenzeitpunkt berechnet wird.

4. Steuerungsverfahren nach Anspruch 1, wobei das Bypass-Ventil (6) bei einem Bruchteil der maximalen Durchflussrate geöffnet ist und jedes Mal, wenn das Ventil (4) geschlossen ist, einen ersten Durchfluss durch den Wärmetauscher und einen zweiten Durchfluss durch die Bypass-Leitung, definiert.

5. Steuerungsverfahren nach Anspruch 1, wobei der Startzeitpunkt des Startschritts und/oder die Öffnung des Bypass-Ventils (6) durch Optimierung einer vorgegebenen Zielspitzenleistung oder einer Mehrzielspitzenleistung oder einer thermischen Energiefunktion wie folgt berechnet werden
Für die Funktion einer Zielspitzenleistung, zumindest auf Basis der Differenz zwischen Einlass- und Auslasswassertemperaturen mindestens eines Wärmekraftwerks, um eine Leistungsspitze des Wärmekraftwerks zu minimieren
Bei der thermischen Energie zumindest basierend auf der Differenz zwischen den Einlass- und Auslasswassertemperaturen mindestens eines Wärmekraftwerks zur Optimierung der Primärenergie, der Produktionskosten oder der gesamten CO2-Emissionen, wobei die Mehrzielfunktion eine Kombination aus der Zielspitzenleistungsfunktion und der Zielwärmeenergiefunktion ist.

6. Steuerungsverfahren nach einem der vorhergehenden Ansprüche, umfassend den Startschritt des Verbindens der Zulaufleitung (2) mit der Rücklaufleitung (3) über die mit dem Bypass-Ventil (6) ausgestattete Bypass-Leitung.

7. Steuerungsverfahren nach einem der vorhergehenden Ansprüche, wobei der Startzeitpunkt des Zuführungsschritts aus einem thermo-fluidischdynamischen mathematischen Modell des Fernwärmenetzes berechnet wird.

## Revendications

1. Procédé de commande d'un réseau de chauffage urbain comprenant:
- une centrale thermique (1) pour fournir de la puissance thermique à au moins un poste utilisateur (10) ;
- une conduite d'alimentation (2) pour de l'eau chaude s'écoulant de la centrale thermique (1),
- une conduite de retour (3) pour de l'eau plus froide entrant dans la centrale thermique (1),
- un échangeur de chaleur (5) en correspondance avec ledit au moins un poste utilisateur ayant une dérivation primaire reliée à la conduite d'alimentation et de retour (2, 3) et pour définir un premier circuit fermé avec la centrale thermique (1),
- une vanne (4), **caractérisé en ce que** la vanne (4) est placée sur le premier circuit fermé et est configurée pour fermer/ouvrir sélectivement la connexion fluidique d'entrée à l'échangeur de chaleur (5) et
- un conduit de dérivation entre les conduites d'alimentation et de retour (2, 3) avec une vanne de dérivation (6),
le procédé de commande comprenant les étapes suivantes:
- Estimer ou acquérir un temps d'augmentation de demande (tₛₜₐᵣₜ₋ᵤₚ) d'une augmentation de la demande de puissance de la centrale thermique par le poste utilisateur;
- Alimenter avant le temps d'augmentation de la demande (tₛₜₐᵣₜ₋ᵤₚ) la conduite d'alimentation (2) en fonction de la demande de puissance de la centrale thermique avec de l'eau chaude lorsque la vanne de dérivation (6) et la vanne (4) sont commutées de manière à définir un deuxième circuit fermé à travers duquel circule l'eau, le deuxième circuit fermé excluant sensiblement l'échangeur (5) et incluant la conduite de retour (3) de sorte que le débit à la température (T_{delivery}) s'écoule à travers le conduit de dérivation vers la conduite de retour (2), avec pour conséquence un préchauffage et une augmentation de la température de l'eau reçue par la au moins une centrale thermique;
- Commuter, en fonction de la demande de puissance de la centrale thermique, la vanne (4) et la vanne de dérivation (6) pour que l'eau chaude de la conduite d'alimentation (2) circule à travers le premier circuit fermé comprenant l'échangeur de chaleur (5) et la conduite de retour (3), e la température (T_{delivery}) en aval du conduit de dérivation est supérieure à celle du début de l'étape d'alimentation.

2. Procédé de contrôle selon la revendication 1, dans lequel l'étape de démarrage comprend l'étape de préchauffage d'une fraction prédéfinie du débit de dérivation maximal pendant une durée prédéfinie avant la durée estimée d'augmentation de la demande.

3. Procédé de contrôle selon la revendication 1, dans lequel l'étape de démarrage est activée à un instant prédéfini avant l'instant estimé d'augmentation de la demande et le débit de dérivation est calculé sur la base d'une estimation d'au moins un poste utilisateur dans un moment de pointe.

4. Procédé de contrôle selon la revendication 1, dans lequel la vanne de dérivation (6) est ouverte à une fraction du débit maximal, à chaque fermeture de la vanne (4) ou définit un premier débit à travers l'échangeur et un deuxième débit à travers la conduite de dérivation.

5. Procédé de commande selon la revendication 1, dans lequel le moment de démarrage de ladite étape de démarrage et/ou l'ouverture de la vanne de dérivation (6) sont calculés par l'optimisation d'une puissance de pointe prédéterminée cible ou multi-cible ou d'une fonction d'énergie thermique basée
Pour la fonction d'une puissante de pointe cible, au moins sur la base de la différence entre les températures d'entrée et de sortie d'au moins une centrale thermique pour minimiser un pic de puissance de la centrale thermique
Pour l'énergie thermique au moins sur la base de la différence entre les températures d'entrée et de sortie de l'eau d'au moins une centrale thermique pour optimiser l'énergie primaire, le cout de production ou les émissions de CO2 totales,
la fonction multi-cible étant une combinaison de la fonction de puissance de pic cible et la fonction d'énergie thermique cible.

6. Procédé de contrôle selon l'une quelconque des revendications précédentes, comprenant l'étape préalable de connexion de la conduite d'alimentation (2) à la conduite de retour (3) par la conduite de dérivation équipée de la vanne de dérivation (6).

7. Procédé de contrôle selon l'une quelconque des revendications précédentes, dans lequel l'instant de début de ladite étape d'alimentation est calculé à partir d'un modèle mathématique thermo-fluidique-dynamique du réseau de chauffage urbain.
